# EUROPEAN PATENT SPECIFICATION

(11) **EP 0 796 944 B1**
(45) Date of publication and mention of the grant of the patent: **05.06.2002**
(21) Application number: 97102821.2
(22) Date of filing: 20.02.1997
(51) Int. Cl.: D06H 3/16, D05B 41/00, B65G 51/02, B65G 47/84

(54) **Pick-up machine for the orderly grouping of hosiery items leaving a pneumatic conveyance duct**
Aufnahmevorrichtung zum geordneten Gruppieren von aus einer pneumatischen Förderleitung austretenden Strumpfwaren
Dispositif de ramasseur pour grouper d'une façon ordonnée des articles de bonneterie sortant d'une tuyauterie de transport pneumatique

(30) Priority: 18.03.1996 IT MI960529
(43) Date of publication of application: 24.09.1997
(73) Proprietor: Conti Complett S.p.A., 20156 Milano (IT)
(72) Inventor: Conti, Stefano, 20121 Milano (IT)
(74) Representative: Modiano, Guido, Dr.-Ing.

(56) References cited:
- GB-A- 1 241 328
- US-A- 4 099 789
- US-A- 4 539 924
- US-A- 4 613 065

## Description

The present invention relates to a pick-up machine for the orderly grouping of hosiery items leaving a pneumatic conveyance duct.

Modern hosiery-making machines are conventionally provided with a pneumatic conveyance duct which takes up the hosiery item at the end of its manufacture on the machine and removes it from the machine, conveying it to a collecting container.

A similar pneumatic conveyance device is provided at the outlet of the machines that turn the hosiery items inside out at the end of the toe stitching operation.

The hosiery items unloaded into the collecting container are then picked up by the operator, who after checking that the hosiery items have no production defects, counts and groups them in bunches, each whereof contains a preset number of hosiery items.

Owing to the fact that modern hosiery-making machines are generally provided with devices capable of indicating abnormal operation of the machine and therefore capable of identifying, during production, any defects of the hosiery item, halting its production, and also owing to time constraints, the check performed by the operator who removes the hosiery items from the container wherein they are collected when leaving the machine that has produced them is usually scanty and quite often is performed by sampling.

Although modern hosiery-making machines are highly reliable in operation, they are not able to detect all possible production defects. For example, if the head of a needle breaks in the hosiery-making machine, the control devices located on the machine are unable to promptly detect this failure and the machine continues to produce hosiery items which inevitably have a ladder at the needle with the broken head.

Owing to the fact that the hosiery items are unloaded haphazardly into the collecting container, there is no assurance that the operator charged with checking the hosiery items checks the last unloaded hosiery item and therefore can promptly notice the occurrence of this defect, which inevitably occurs again in the hosiery items being produced.

This operating method therefore entails the problem of requiring a large number of operators to control and group the hosiery items leaving the machine which produces them or the machine which turns them right way out and of not allowing to immediately detect any production defects on the hosiery items, with the consequence of significant rejects which affect production costs.

US-A-4539924 discloses an arrangement for collecting and stacking hosiery articles coming from a circular hosiery knitting machine, which includes a suction plate of a temporary collection space having two arrays of perforations for creating an air motion and differential pressure field for distending the articles so as to have them orderly dropping onto a rod-like supporting member positioned beneath the temporary collection space.

US-A-4099789 (upon which the preamble of claim 1 is based) discloses a system for automatically orientating hosiery blanks upon a conveyor, selectively transferring the blanks from the conveyor to a turret assembly by means of a pick-up assembly, in which the turret assembly includes a plurality of support units for sequentially conveying the blanks in an arcuate path to an automatic toe closing machine.

US-A-4613065 discloses a hosiery handling method after the hosiery has been stripped from a form, which method comprises transferring hosiery one at a time from a stripping mechanism to an accumulating mechanism, vertically suspending the hosiery from the accumulating mechanism, straightening the hosiery by contacting the hosiery while it is vertically suspended with a stroking element, accumulating a desired number of hosiery in the accumulating mechanism by performing the above steps, and transferring the desired number from the accumulator mechanism by releasing the accumulated hosiery when the stroking element is in contact with the hosiery intermediate its length for folding the hosiery over the stroking element.

A principal aim of the present invention is to solve the above problem by providing a pick-up machine which is capable of automatically grouping in an orderly fashion hosiery items leaving a pneumatic conveyance duct, of the type provided on machines for producing hosiery items or for turning them right way out, so as to significantly reduce the labor required for these operations.

Within the scope of this aim, an object of the invention is to provide a pick-up machine which, since it groups the hosiery items in an orderly fashion, following the sequence with which the hosiery items leave the pneumatic conveyance duct, facilitates the operator charged with detecting any production defects, allowing him to act promptly on the hosiery-making machine, thus reducing production rejects.

Another object of the invention is to provide a pick-up machine which is structurally simple and highly reliable in operation.

In accordance with the invention, there is provided a pick-up machine including a hosiery item spreading device arranged at the end of a pneumatic conveyance device, as defined in the appended claims.

The particular characteristics and advantages of the invention will become apparent from the following detailed description of a preferred but not exclusive embodiment of the device according to the invention, illustrated only by way of non-limitative example in the accompanying drawings, wherein:

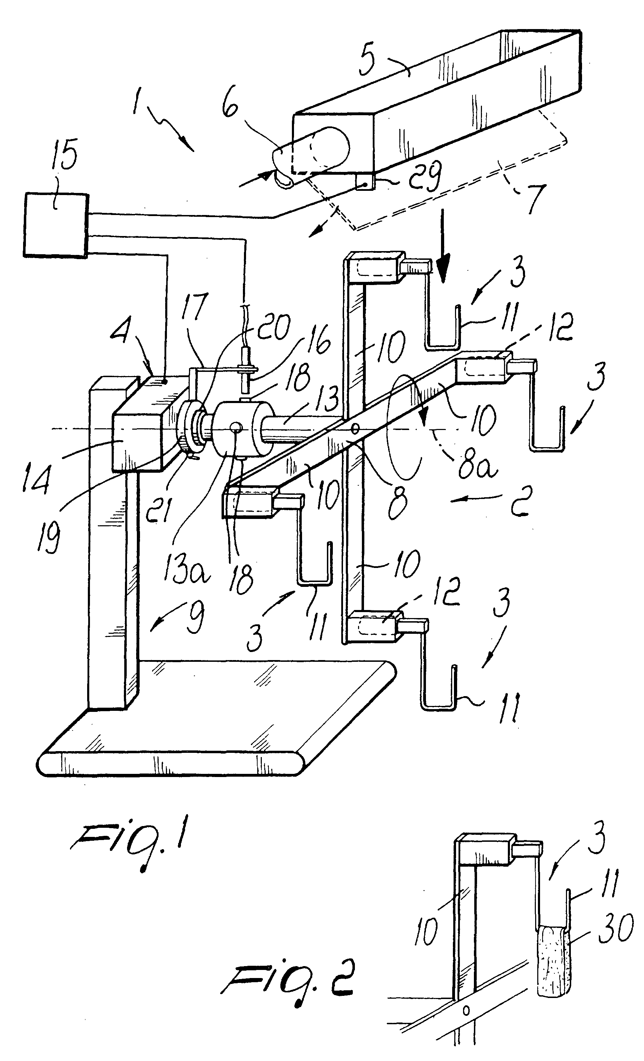

figure 1 is a schematic perspective view of the pick-up machine according to the invention;
figure 2 is a perspective view of a detail of the means for supporting the moving element.

With reference to the above figures, the pick-up machine according to the invention, generally designated by the reference numeral 1, comprises a moving element 2 having supporting means 3 for groups of hosiery items, the supporting means being spaced from one another on the moving element 2. The pick-up machine also comprises means 4 for moving the moving element 2 in order to sequentially position one of the supporting means 3 below a hosiery item spreading device 5 arranged at the end of a pneumatic conveyance duct 6 to allow one of the supporting means 3 to receive, each time, a presettable number of hosiery items delivered sequentially by the spreading device 5.

The spreading device 5 can be constituted by a conventional spreading device, for example of the type provided with a lower door 7 wherethrough the correctly spread hosiery item 30 is delivered downwards by gravity.

The moving element 2 is preferably constituted by a carousel element 8 which is rotatably supported about its own horizontally arranged axis 8a by a supporting structure 9. The carousel element 8 has arms 10 extending radially with respect to the axis 8a and supporting, at their opposite end with respect to said axis 8a, the supporting means 3 for the groups of hosiery items.

In the illustrated embodiment there are provided four arms 10, but according to requirements it is also possible to provide only two arms 10 or a larger number of arms 10 which are in any case spaced uniformly around the axis 8a, so as to achieve a uniform angular spacing of the supporting means 3 around the axis 8a.

The supporting means 3 are preferably constituted by hook-like elements 11, each whereof is supported by a shaft 12 which is arranged so that its axis is parallel to the axis 8a and is rotatably supported about its own axis by the corresponding arm 10 of the carousel element 8, so that during the rotation of the carousel element 8 about its own axis 8a each hook-like element 11 remains at all times on a vertical plane because of its own weight.

The carousel element 8 is fixed to the end of a main shaft 13, the axis whereof coincides with the axis 8a and is rotatably supported about its own axis by the supporting structure 9.

The means for moving the moving element 2 are conveniently constituted by a gearmotor 14, for example a gearmotor provided with an electric motor, which is mounted on the supporting structure 9 and is connected to the main shaft 13 by means of its output shaft.

Means are advantageously provided for controlling the rotation of the carousel element 8 and are operatively connected to an actuation element 15 of the gearmotor 14.

The means for controlling the rotation of the carousel element 8 comprise a sensor 16 which is mounted on a secondary arm 17 and radially faces a portion 13a of the main shaft 13 which bears reading marks 18 for the sensor 16.

The reading marks 18 are angularly spaced from one another around the axis 8a in a manner which corresponds to the angular spacing of the arms 10, i.e., of the hook-like elements 11. Whenever it detects a reading mark 18, the sensor 16 stops the rotation of the carousel element 8 so as to correctly position a hook-like element 11 below the spreading device 5, as will become apparent hereinafter.

The secondary arm 17 is fixed to a ring 19 arranged coaxially around the main shaft 13 and supported by the supporting structure 9, for example by means of a sleeve 20. The sleeve 20 is crossed coaxially by the main shaft 13, which can rotate about its own axis with respect to the sleeve 20, which is fixed to the supporting structure 9. The ring 19 can be rotated about the axis 8a with respect to the sleeve 20 and can be fixed in preset positions by a locking element constituted for example by a screw with a knob 21, so as to allow adjustment of the stopping position of the hook-like elements 11 below the spreading device 5.

The sensor 16 can be constituted by an inductive sensor, providing for the reading marks 18 to be constituted by raised regions of the portion 13a of the main shaft 13; as an alternative, it can be constituted by a photocell by providing, for the reading marks 18, a different reflection with respect to the remaining part of the portion 13a, or it can be constituted by other conventional sensors.

The means for controlling the rotation of the carousel element 8 can also be constituted by an encoder which controls the rotation of the output shaft of the gearmotor 14 or the rotation of the motor of the gearmotor.

The operation of the pick-up machine according to the invention is as follows.

In each instance, through the actuation of the gearmotor 14, a hook-like element 11 is arranged below the spreading device 5.

The position of the hook-like element 11 moved below the spreading device 5 is studied so that the hook-like element 11 is at the vertical of an intermediate region of the longitudinal extension of the hosiery item 30 which is spread out in the spreading device 5.

Every time a hosiery item is released by gravity from the spreading device 5, it falls astride the hook-like element 11 that is arranged below the spreading device 5. The carousel element 8 is kept in this position until the spreading device 5 has unloaded a preset number of hosiery items.

The unloaded hosiery items can be counted by the same machine that produces the hosiery items or by the machine that turns them right way out, or by a hosiery item counter 29 arranged on the spreading device, which detects the opening cycles of the lower door 7 of the spreading device.

The counter, or the hosiery-making machine or the machine for turning the hosiery items right way out, is operatively connected to the actuation element 15 which, when a preset number of hosiery items on a hook-shaped element 11 is reached, activates the gearmotor 14, which causes the rotation of the carousel element 8 about its own axis 8a, moving a subsequent empty hook-like element 11 below the spreading device 5 in order to receive another group of hosiery items.

Rotation of the carousel element 8 is controlled by the sensor 16, which ensures correct positioning of the next hook-like element 11 below the spreading device 5.

When all the hook-like elements 11 have received a group of hosiery items composed of a preset number of hosiery items, the assigned operator binds the groups of hosiery items and removes them from the hook-like elements 11, allowing a new hosiery item loading cycle as described to begin.

Owing to the fact that the hosiery items are loaded onto the hook-like elements 11 in the same sequence in which they leave the machine that produced them, or the machine for turning them right way out, the operator who removes the groups of hosiery items to check that they are free from production defects simply needs to check the last hosiery item of the last group of hosiery items loaded onto the pick-up machine. If the last hosiery item has no manufacturing defects, assuredly all the other previously unloaded hosiery items are free from defects. Viceversa, if the last hosiery item is defective, the operator acts promptly on the machine in order to restore its correct operation and contain the extent of production rejects.

By reducing and speeding up the actions of the operator to remove the hosiery items, which are already correctly grouped together, the device according to the invention also allows to reduce the required labor.

In practice it has been observed that the device according to the invention fully achieves the intended aim since, by automatically grouping the hosiery items leaving a hosiery-making machine, or a machine for turning them right way out, it reduces the labor required for this operation and also allows to significantly limit production rejects.

The pick-up machine thus conceived is susceptible of numerous modifications and variations, all of which are within the scope of the inventive concept; all the details may also be replaced with other technically equivalent elements.

In practice, the materials employed, as well as the dimensions, may be any according to requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pick-up machine (1) including a hosiery item spreading device (5) arranged at the end of a pneumatic conveyance duct (6) for grouping, in an orderly fashion, hosiery items (30) leaving said pneumatic conveyance duct (6), **characterized in that** it comprises a moving element (2) provided with supporting means (3) for groups of hosiery items (30), said supporting means (3) being spaced from one another on said moving element (2); means (4) being also provided for moving said moving element (2) in order to sequentially position one of said supporting means (3) below said hosiery item spreading device (5) so that one of said supporting means (3) receives every time a presettable number of hosiery items (30) delivered sequentially by said spreading device (5).

2. A pick-up machine (1) according to claim 1, **characterized in that** said moving element (2) is constituted by a carousel element (8) rotatable on command about its own axis (8a), said supporting means (3) for groups of hosiery items (30) being angularly spaced from one another around the axis (8a) of said carousel element (8).

3. A pick-up machine (1) according to claim 2, **characterized in that** it comprises a supporting structure (9) which rotatably supports said carousel element (8) about its own horizontal axis (8a).

4. A pick-up machine (1) according to claim 2, **characterized in that** said supporting means (3) for groups of hosiery items (30) comprise hook-like elements (11) which are individually rotatably supported by said carousel element (8) about a corresponding rotation axis which is parallel to the axis (8a) of said carousel element (8) and are uniformly spaced from one another around the axis (8a) of said carousel element (8).

5. A pick-up machine (1) according to claim 4, **characterized in that** said hook-like elements (11) are mounted on arms (10) of said carousel element (8) which protrude radially with respect to the axis (8a) of said carousel element (8).

6. A pick-up machine (1) according to claim 3, **characterized in that** said means (4) for moving said moving element (2) comprise a gearmotor (14) which is mounted on said supporting structure (9) and is connected, by its output shaft, to a main shaft (13) fixed coaxially to said carousel element (8).

7. A pick-up machine (1) according to claim 6, **characterized in that** it comprises control means (16-18) for controlling the rotation of said carousel element (8) which are operatively connected to an element (15) for actuating said means (4) for moving said moving element (2).

8. A pick-up machine (1) according to claim 7, **characterized in that** said control means comprise a sensor (16) which radially faces a portion (13a) of said main shaft (13) that bears reading marks (18) for said sensor (16) which are angularly spaced from each other around the axis of said main shaft (13) so as to correspond to the spacing between the arms (10) of said carousel element (8) in order to halt the rotation of said carousel element (8) when one of said arms (10) reaches a preset position wherein the corresponding hook-like element (11) is arranged below the spreading device (5) to allow the hosiery items (30) released by the spreading device (5) to fall astride the hook-like element (11) arranged below said spreading device (5).

9. A pick-up machine (1) according to claim 8, **characterized in that** the position of said sensor (16) around the axis of said main shaft (13) is adjustable in order to adjust the position of the hook-like element (11) which in each instance is arranged below the spreading device (5) through the rotation of said carousel element (8) about its own axis.

10. A pick-up machine (1) according to claim 7, **characterized in that** it comprises a counter element (29) for counting the hosiery items (30) released by said spreading device (5), said counter element (29) being operatively connected to said element (15) for the actuation of said means (4) for moving said moving element (2).

## Patentansprüche

1. Aufnahmevorrichtung (1) mit einer am Ende einer pneumatischen Förderleitung (6) angeordneten Ausbreitevorrichtung (5) für Strumpfwaren zum Gruppieren von die pneumatische Förderleitung (6) verlassenden Strumpfwaren (30), **dadurch gekennzeichnet, daß** sie ein bewegliches Element (2) mit Haltemitteln (3) für Gruppen von Strumpfwaren (30) enthält, wobei die Haltemittel (3) an dem beweglichen Element (2) zueinander beabstandet angeordnet sind und Mittel (4) zum Bewegen des beweglichen Elements (2) vorgesehen sind, um nacheinander jeweils eines der Haltemittel (3) derart unter der Ausbreitevorrichtung (5) für Strumpfwaren zu positionieren, daß jedes Mal eines der Haltemittel (3) eine voreinstellbare Anzahl von Strumpfwaren (30) aufnimmt, die nacheinander von der Ausbreitevorrichtung (5) abgegeben werden.

2. Aufnahmevorrichtung (1) nach Anspruch 1, **dadurch gekennzeichnet, daß** das bewegliche Element (2) aus einem auf Anforderung um seine Achse (8a) drehbaren Rundlaufelement (8) besteht, wobei die Haltemittel (3) für Gruppen von Strumpfwaren (30) in Winkelabständen voneinander um die Achse (8a) des Rundlaufelements (8) angeordnet sind.

3. Aufnahmevorrichtung (1) nach Anspruch 2, **dadurch gekennzeichnet, daß** sie eine Trägerstruktur (9) hat, die das Rundlaufelement (8) um seine horizontale Achse (8a) drehbar trägt.

4. Aufnahmevorrichtung (1) nach Anspruch 2, **dadurch gekennzeichnet, daß** die Haltemittel (3) für Gruppen von Strumpfwaren (30) hakenförmige Elemente (11) haben, die von dem Rundlaufelement (8) individuell drehbar um eine zu der Achse (8a) des Rundlaufelements (8) parallele entsprechende Drehachse gehalten und um die Achse (8a) des Rundlaufelements (8) gleichmäßig voneinander beabstandet sind.

5. Aufnahmevorrichtung (1) nach Anspruch 4, **dadurch gekennzeichnet, daß** die hakenförmigen Elemente (11) an Armen (10) des Rundlaufelements (8) befestigt sind, die radial zur Achse (8a) des Rundlaufelements (8) abstehen.

6. Aufnahmevorrichtung (1) nach Anspruch 3, **dadurch gekennzeichnet, daß** die Mittel (4) zum Bewegen des beweglichen Elements (2) einen Getriebemotor (14) enthalten, der an der Trägerstruktur (9) angebracht und durch seine Abtriebswelle mit einer Hauptwelle (13) verbunden ist, die koaxial an dem Rundlaufelement (8) angebracht ist.

7. Aufnahmevorrichtung (1) nach Anspruch 6, **dadurch gekennzeichnet, daß** sie Steuermittel (16-18) zum Steuern der Drehung des Rundlaufelements (8) enthält, die mit einem Element (15) zum Aktivieren der Mittel (4) in Wirkverbindung stehen, um das bewegliche Element (2) zu bewegen.

8. Aufnahmevorrichtung (1) nach Anspruch 7, **dadurch gekennzeichnet, daß** die Steuermittel einen Sensor (16) enthalten, der einem Abschnitt (13a) der Hauptwelle (13) radial gegenübersteht, welcher Lesemarken (18) für den Sensor (16) trägt, die in Winkelabständen voneinander um die Achse der Hauptwelle (13) angeordnet sind, so daß sie den Abständen zwischen den Armen (10) des Rundlaufelements (8) entsprechen, um die Drehung des Rundlaufelements (8) zu beenden, wenn einer der Arme (10) eine vorbestimmte Position erreicht, in der das entsprechende hakenförmige Element (11) unter der Ausbreitevorrichtung (5) angeordnet ist, damit Strumpfwaren (30), die von der Ausbreitevorrichtung (5) ausgegeben werden, quer über das unter der Ausbreitevorrichtung (5) angeordnete hakenförmige Element (11) fallen können.

9. Aufnahmevorrichtung (1) nach Anspruch 8, **dadurch gekennzeichnet, daß** die Position des Sensors (16) um die Achse der Hauptwelle (13) verstellbar ist, um die Position des hakenförmigen Elements (11) einzustellen, das durch die Drehung des Rundlaufelements (8) um seine Achse immer unter der Ausbreitevorrichtung (5) angeordnet wird.

10. Aufnahmevorrichtung (1) nach Anspruch 7, **dadurch gekennzeichnet, daß** es ein Zählelement (29) zum Zählen der von der Ausbreitevorrichtung (5) ausgegebenen Strumpfwaren (30) enthält, wobei das Zählelement (29) mit dem Element (15) zum Aktivieren der Mittel (4) in Wirkverbindung steht, um das bewegliche Element (2) zu bewegen.

## Revendications

1. Machine de ramassage (1) incluant un dispositif d'étalement d'articles de bonneterie (5) disposé à une extrémité d'un conduit d'acheminement pneumatique (6) pour grouper de manière ordonnée, des articles de bonneterie (30) quittant ledit conduit d'acheminement pneumatique (6), **caractérisé en ce qu'**il comprend un élément mobile (2) muni de moyens de support (3) pour des groupes d'articles de bonneterie (30), lesdits moyens de support (3) étant espacés les uns des autres sur ledit élément mobile (2); des moyens (4) étant également prévus pour déplacer ledit élément mobile (2) de manière à positionner séquentiellement l'un desdits moyens de support (3) en dessous dudit dispositif d'étalement d'articles de bonneterie (5) de telle sorte que l'un desdits moyens de support (3) reçoit à chaque fois un nombre pré-réglable d'articles de bonneterie (30) délivrés séquentiellement par ledit dispositif d'étalement (5).

2. Machine de ramassage (1) selon la revendication 1, **caractérisée en ce que** ledit élément mobile est constitué par un élément formant carrousel (8) apte à tourner sur commande autour de son propre axe (8a), lesdits moyens de support (3) pour des groupes d'articles de bonneterie (30) étant espacés angulairement les uns des autres autour de l'axe (8a) dudit élément formant carrousel (8).

3. Machine de ramassage (1) selon la revendication 2, **caractérisée en ce qu'**elle comprend une structure de support (9) qui supporte à rotation ledit élément formant carrousel (8) autour de son propre axe horizontal (8a).

4. Machine de ramassage (1) selon la revendication 2, **caractérisée en ce que** lesdits moyens de support (3) pour des groupes d'articles de bonneterie (30) comprennent des éléments en forme de crochet (11) qui sont supportés individuellement à rotation par ledit élément formant carrousel (8) autour d'un axe de rotation correspondant qui est parallèle à l'axe (8a) dudit élément formant carrousel (8) et sont uniformément espacés les uns des autres autour de l'axe (8a) dudit élément formant carrousel (8).

5. Machine de ramassage (1) selon la revendication 4, **caractérisée en ce que** lesdits éléments en forme de crochet (11) sont montés sur des bras (10) dudit élément formant carrousel (8) qui font saillie radialement par rapport à l'axe (8a) dudit élément formant carrousel (8).

6. Machine de ramassage (1) selon la revendication 3, **caractérisée en ce que** lesdits moyens (4) pour déplacer ledit élément mobile (2) comprennent un motoréducteur (14) qui est monté sur ladite structure de support (9) et est connecté, par son arbre de sortie, à un arbre principal (13) fixé coaxialement audit élément formant carrousel (8).

7. Machine de ramassage (1) selon la revendication 6, **caractérisée en ce qu'**elle comprend des moyens de commande (16 - 18) pour commander la rotation dudit élément formant carrousel (8) qui sont fonctionnellement reliés à un élément (15) pour actionner lesdits moyens (4) pour déplacer ledit élément mobile (2).

8. Machine de ramassage (1) selon la revendication 7, **caractérisée en ce que** lesdits moyens de commande comprennent un capteur (16) qui fait radialement face à une portion (13a) dudit arbre principal (13) qui porte des repères de lecture (18) pour ledit capteur (16) qui sont angulairement espacés les uns des autres autour de l'axe dudit arbre principal (13) de manière à correspondre à l'espacement entre les bras (10) dudit élément formant carrousel (8) afin d'arrêter la rotation dudit élément formant carrousel (8) lorsque l'un desdits bras (10) atteint une position pré-réglée, l'élément correspondant en forme de crochet (11) étant disposé en dessous du dispositif d'étalement (5) de manière à permettre aux articles de bonneterie (30) libérés par le dispositif d'étalement de tomber à cheval sur l'élément en forme de crochet (11) disposé en dessous dudit dispositif d'étalement (5).

9. Machine de ramassage (1) selon la revendication 8, **caractérisée en ce que** la position dudit capteur (16) autour de l'axe dudit arbre principal (13) est réglable afin d'ajuster la position de l'élément en forme de crochet (11) qui dans chaque cas est disposé en dessous du dispositif d'étalement (5) par la rotation dudit élément formant carrousel (8) autour de son propre axe.

10. Machine de ramassage (1) selon la revendication 7, **caractérisée en ce qu'**elle comprend un élément formant compteur (29) pour compter les articles de bonneterie (30) libérés par ledit dispositif d'étalement (5), ledit élément formant compteur (29) étant relié fonctionnellement audit élément (15) pour l'actionnement desdits moyens (4) pour déplacer ledit élément mobile (2).
